# FASCICULE DE BREVET EUROPEEN

(11) **EP 0 613 872 B1**
(45) Date de publication et mention de la délivrance du brevet: **10.02.1999**
(21) Numéro de dépôt: 94103379.7
(22) Date de dépôt: 06.03.1994
(51) Int. Cl.: C05F 17/02, C05F 17/00

(54) **Procédé pour le compostage de déchets organiques et installation pour sa réalisation**
Verfahren und Vorrichtung zum Kompostieren von organischen Abfällen
Process and device for composting organic wastes

(30) Priorité: 05.03.1993 CH 671/93
(43) Date de publication de la demande: 07.09.1994
(73) Titulaire: PORETTI-GAGGINI SA, 6930 Bedano (CH)
(72) Inventeur: Jaccard, Léon, CH-6985 Curio (CH)
(74) Mandataire: Gaggini, Carlo, Dipl.Ing.

(56) Documents cités:
- EP-A- 0 431 212
- EP-A- 0 543 097
- CH-A- 397 736
- DE-A- 3 313 862

## Description

La présente invention concerne une installation et un procédé pour le compostage des déchets organiques broyés tels que déchets de jardin et de forêt , restes de cuisine crus ou cuits selon le texte des revendications 1 et 8.
Le problème de la transformation des déchets organiques en compost recyclable dans la nature a été mis en pratique au 12ème siècle déjà par les Templiers, une congrégation qui, avec grande précision, a défini les bases nécessaires à un procédé moderne de compostage.

En se basant sur cet enseignement, le compostage des déchets végétaux se fait selon les quatre phases suivantes:
1. L'humidification du matériel.
2. La phase active à température élevée, appelée de nos jours phase de pré-compostage, durant laquelle la température peut atteindre 80°C.
3. La phase de maturation, laquelle peut être plus ou moins complète selon le temps et les conditions dans lesquelles elle est conduite.
4. L'épandage horizontal sur le terrain du matériel composté.
   La méthode préconisée par les Templiers a donné et donne encore de bons résultats dans la pratique, mais présente le grand inconvénient de travailler en mode discontinu, surtout pour la phase de maturation pendant laquelle le matériel est laissé sur le terrain pendant plusieurs mois tout en nécessitant l'application d'interventions destinées à garantir un degré d'humidité suffisant avant de passer à la phase 4). Malgré cette durée de 90 jours de maturation le compost n'était pas encore mûr, c'est à dire biologiquement inerte, ce que désiraient les Templiers, car leur intention était de répandre sur le terrain un compost pas totalement inerte, donc en mesure d'apporter encore de la chaleur.
   L'inconvénient du système des Templiers consiste avant tout dans le fait qu'il s'agit d'un système discontinu , difficilement mécanisable et, par dessus tout, qui exige des temps de maturation de longue durée, ce qui rend très encombrantes les installations qui appliquent cette méthode puisque les surfaces nécessaires à la réalisation des phases 2 et 3 sont très importantes.
   On a cherché à réduire la durée du pré-compostage et celle de la maturation en introduisant des techniques modernes de retournement systématique des tas de matériel. Ces installations, réalisées aujourd'hui en grand nombre et dont le but consiste essentiellement à améliorer l'aération des tas de façon à augmenter la quantité d'oxygène nécessaire au procéssus de transformation aérobique, présentent encore et toujours les désavantages du système mentionné ci avant, puisqu'ils exigent une manutention et une surveillance importantes. Là où de telles installations mécanisées de ce type ont été exécutées, c'est à dire avec le matériel déposé en tas et retourné mécaniquement, il s'agissait toujours d'installations très grandes et coûteuses, ne convenant guère à résoudre le problème de compostage de petites régions ou faiblement peuplées, là où la récolte des déchets aussi bien végétaux que de cuisine pose des problèmes considérables de transport. En outre de telles installations présentent l'inconvénient ultérieur, surtout au moment du retournement mécanique, d'émettre une odeur assez forte, de sorte que les installations doivent être faites dans des hangars fermés de grandes dimensions et coûteux.
   Des installations de ce type ont également fait l'objet de nombreuses demandes de brevets, parmi lesquelles il convient de mentionner celle portant la désignation DE-A-2843785 qui montre comment créer, dans les tas de matériel à composter, des chambres destinées à augmenter la surface d'aération, ou encore la demande DE-A-3401889, selon laquelle, pour réduire les émissions d'odeurs provenant de la fermentation du matériel, de l'air est insufflé au travers des tas, ou encore la demande PCT-WO.90/11263 qui décrit une installation de compostage de grandes dimensions munie d'un dispositif de remuage du matériel.
   Une autre proposition intéressante est celle de la demande CH-A-676235, qui prévoit la réalisation de la phase de pré-compostage dans une enceinte fermée où le matériel est abondamment humidifié. Après cette opération le matériel est extrait du conteneur pour être déposé sur le terrain naturel, en tas, pour la maturation finale. L'avantage de ce mode de procéder est d'éviter le retournement des tas et les émissions d'odeurs désagréables par le fait que la phase de pré-compostage a lieu en enceinte fermée. Par contre ce système présente l'inconvénient de ne pas être automatique puisque le remplissage, la vidange du conteneur et la formation des tas sont faits manuellement et exigent en outre des temps de maturation relativement longs.
   Le but de la présente invention est de proposer un procédé de compostage qui permet de réaliser, dans la pratique, les enseignements des Templiers, en les adaptant aux exigences actuelles de notre société, qui sont:
   a) Le dispositif réalisant le procédé doit fonctioner d'une manière automatique, c'est à dire qu'il ne doit pas requérir de travaux de manutention, mais seulement de surveillance.
   b) Le processus doit avoir lieu en continu, c'est à dire que le passage du matériel à travers l'installation doit avoir lieu de manière ininterrompue.
   c) La durée du procéssus de pré-compostage et de maturation doit permettre de réduire les dimensions de l'installation entre des limites acceptables.
   d) L'installation qui met en oeuvre le procédé ne doit pas émettre d'odeurs, de manière à pouvoir être placée dans le voisinage de zones habitées.
   e) L'installation doit pouvoir constituer une unité de dimensions réduites pour éviter de longs transports de récolte des déchets à transformer en compost.

Ces buts et d'autres qui seront mentionnés en détail par la suite, sont obtenus au moyen d'un procédé de compostage dont les spécifications sont décrites dans la partie caractérisante de la revendication 8), tandis que la revendication 1) donne les caractéristiques d'une installation destinée à la réalisation du procédé décrit ici.

Les autres revendications concernent par contre d'autres perfectionements aussi bien du procédé que de l'installation de base, lesquelles feront l'objet d'explications plus détailiées et plus précises au cours de la description qui suit.
L'invention est décrite plus précisément à l'aide de queques exemples de réalisations représentées par des Figures.
Celles ci présentent :
- Fig.1: Une représentation d'une installation de compostage selon l'invention, vue en section selon l'axe A-A de la Fig. 2 et représentée schématiquement par ses composants.
- Fig. 2: L'installation de la Fig.1 vue en plan, en représentation schématique.
- Fig. 3: Un détail de l'installation des Fig. 1 et 2 pour montrer le système d'extraction du matériel de la chambre du digesteur.
- Fig. 4 ou 5: Représenation schématique d'une installation de compostage avec une variante de système d'extraction du matériel mûr de la chambre de maturation.

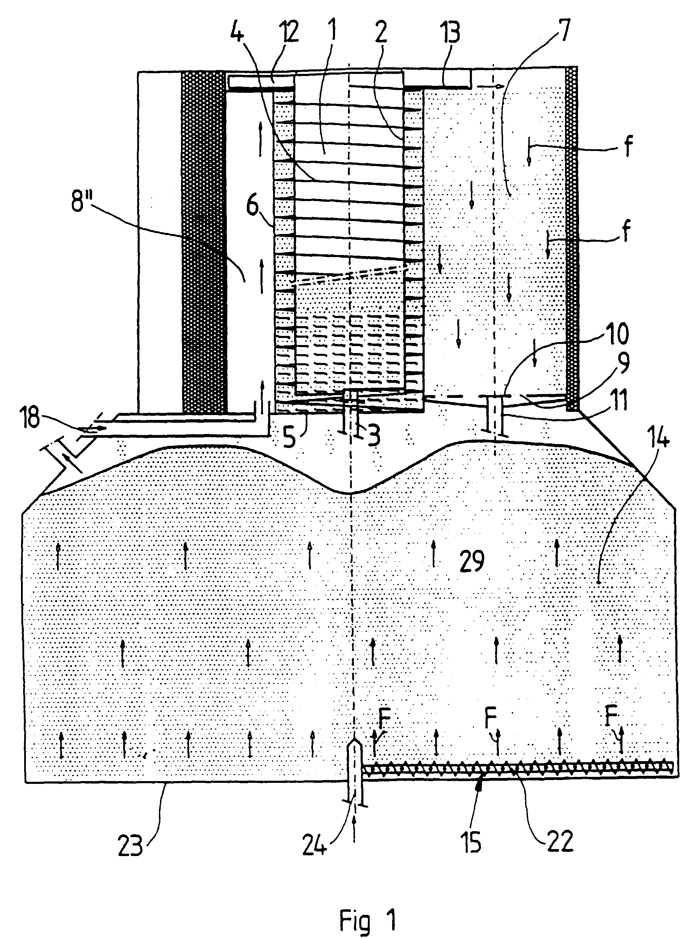

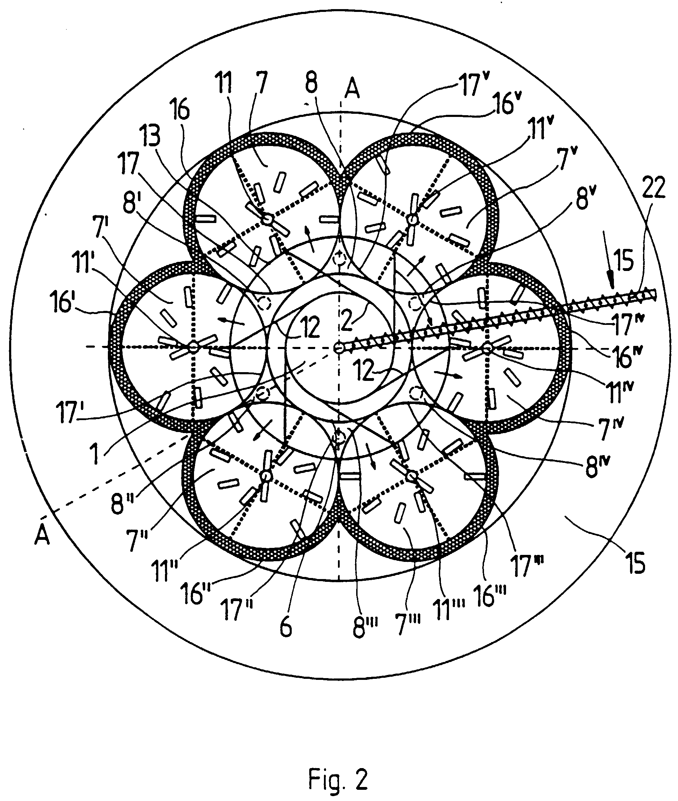

- Les Fig 1 et 2: montrent, en coupe et en plan , un premier exemple de réalisation d'une installation de compostage permettant de mettre en oeuvre le procédé faisant l'objet de l'invention.

A l'aide de ces Figures nous expliquerons maintenant le procédé de l'invention, lequel prévoit, selon les caractéristiques de la revendication 1, trois phases bien distinctes de travail, qui sont:
a) Humidification du matériel dans des conditions bien déterminées (durée de 2 à 10 heures).
b) Pré-compostage aérobique dans un digesteur durant une période de temps bien déterminée (de 2 à 6 jours) et à une température comprise entre 65° et 80°C.
c) La maturation aérobique en enceinte de maturation durant une période de temps comprise entre 8 et 20 jours et à une température moyenne comprise entre 25 et 40°C. où les phases de travail sont exécutées en mode continu.

Les explications suivantes sont données ci après au sujet des indications contenues dans la revendication 1 :
Quand il est question de température moyenne on entend le fait que le matériel, soumis au procéssus en question, traverse des zones de travail dans lesquelles une température qui peut varier entre des limites assez larges: par température moyenne on entend donc la valeur moyenne de la température calculée sur toute la durée de la période du temps de traitement.
Le concept de "continu" définissant un traitement signifie que le matériel est traité selon une solution de continuité, c'est à dire pas suivant un mode discontinu comme cela serait le cas si les phases de travail étaient cycliques , essentiellement statiques et qui suivent une autre. Le concept de "continu" contient donc, dans la conception de cette invention, un sens de "dynamique" par lequel le matériel passe dynamiquement à travers les différentes phases du procéssus. Dans la pratique cela signifie que le matériel traverse l'installation en restant toujours en mouvement. La vitesse absolue de déplacement du matériel à travers les différentes phases de transformation peut naturellement varier de manière importante, selon le volume du matériel traité parallèlement dans chacune des phases de travail. En outre le concept de "continu" comprend l'idée de base que le matériel passe d'une phase à l'autre dans une solution de continuïté et sans interventions extérieures, c'est à dire tel un flux continu de matériel.

Le procédé de compostage selon la revendication 1 a donc l'avantage de réaliser un mode de travail automatisé et dépourvu de toute intervention manuelle, où le matériel, durant le procéssus, subit une transformation complète ou au moins essentiellement complète de matériel frais en compost mûr prêt à l'emploi. Il faut cependant souligner le fait que la notion de degré de maturation du compost présente quelque difficulté à être définie, car le processus de maturation est un processus de caractère assymptotique lié à l'activité des bactéries qui provoquent la transformation. Un compost complètement mûr est celui dans lequel toute activité bactérienne a cessé et par voie de conséquence, où il n'existe plus de production de chaleur. Le produit obtenu doit donc être complètement stabilisé et satisfaire aux conditions de stérilisation qui permettent de l'ensacher et de le commercialiser sans limite de temps de stockage.

Selon une première forme préférée du procédé inventif, pour obtenir une opération de précompostage aérobique bien contrôlée et gérée correctement, on fait passer un courant d'air à travers le matériel qui se trouve dans le digesteur. Le dosage de cet air et le choix opportun de ses caractéristiques spécifiques (par exemple de température et d'humidité) permettent d'influencer les conditions de pré-compostage dans le but de son homogénéïsation. Il est évident qu'un passage continu du matériel, selon la présente invention, présente un avantage certain. En fait, dans la pratique, comme c'est le cas dans la demande CH-A-676235 - égale d'ailleurs à la EP-A-0431212 sans en revendiquer toutefois la priorité - il est bien indiqué de faire passer un courant d'air forcé à travers le matériel durant la phase de pré-compostage. Et c'est précisément là que l'on constate un des plus importants avantages de la présente invention. En effet, l'inssuflation d'air dans un tas ou dans une colonne de matériel immobile, provoque nécessairement la formation de canaux préférentiels de passage d'air, étant donné que l'air choisit toujours le chemin de moindre résistance. II se forme ainsi à l'intérieur de la masse de matériel des zones à plus forte intensité de transformation, dues à l'apport plus important d'oxygène produisant l'activité bactérienne dans les zones traversées. II s'ensuit une différence de vitesse de transformation du matériel qui devient hétérogène.Ce phénomène provoque par ailleurs un rallentissement du procéssus, puisque, pour obtenir un traitement acceptable, il est nécessaire que toutes les parties de l'installation arrivent à un certain degré de maturation minimum, au dessous duquel ni la stabilisation ni la stérilisation suffisantes du matériel ne peuvent être garanties. Ce sont donc les parties du matériel dans lesquelles le passage de l'air est moindre qui déterminent la durée des différentes phases du procéssus. Ce problème est résolu d'une façon élégante et efficace grâce à la caractéristique de continuité de traitement précité, puisque le mouvement continu de déplacement auquel le matériel est soumis, aussi bien pendant la phase de pré-compostage que pendant la suivante de la maturation, empèche la formation de canaux préférentiels dans le matériel.
De ce fait on obtient des conditions de traitement égales et constantes à l'intérieur de toute la masse, avec comme conséquence une homogénéïsation optimale du matériel avec la possibilité de réduire les temps des différentes phases. Cette continuité du traitement liée à une migration ininterrompue du matériel à travers les organes de travail joue un rôle prédominant dans la particularité de la présente invention, puisque c'est à elle que l'on doit en grande partie les avantages supplémentaires du procéssus inventif par rapport à l'Etat de la technique, avantages qui s'ajoutent à ceux mentionnés ci-avant et qui peuvent être résumés de la manière suivante:
- Grande homogénéïté du produit fini, qui est stérile dans toute sa masse puisque la température atteint partout une valeur moyenne supérieure à 65°C.
- Rapidité de traitement qui permet en particulier d'automatiser également la phase de maturation aérobique, pour laquelle la méthode des tas déposés sur le terrain était utilisée.

Une autre variante préférée du processus inventif prévoit le pré-chauffage de l'air nécessaire au pré-compostage en faisant passer celui-ci en contre courant par rapport au sens de déplacement du matériel, dans les canaux, non isolés, séparant les digesteurs. Cette variante apporte deux avantages supplémentaires qui sont:
- D'un côté elle permet d'accélérer le procéssus de pré-compostage. En effet l'air qui traverse le matériel du digesteur en contre courant entre en contact avec la couche la plus fraiche de matériel déjà chaude à une température supérieure de plusieurs degrés, en règle de plus de 10°C, à la température ambiante. Le départ de la transformation aérobique du matériel, précisément point très important puisqu'on sait que la phase initiale de fermentation, laquelle nécessite un apport important d'oxygène pour assurer une activité bactérienne intense, est décisive pour assurer le succès de l'opération de compostage.
- Le pré-chauffage de l'air de pré-compostage est un moyen d'éviter les pertes de chaleur de parois des digesteurs sans recourir à des isolations extérieures coûteuses.
   Une installation permettant de réaliser le procéssus de travail cité plus haut est décrite à titre d'exemple à l'aide des Figures 1 et 2.
   Dans les Figures 1 et 2, dans lesquelles les éléments de construction sont représentés seulement schématiquement, bien suffisant pour expliquer le fonctionement, la chambre d'humidification du matériel est indiquée par la référence 1. Cette chambre est formée d'un cylindre complètement ouverte à sa partie supérieure, tandis qu'à sa partie inférieure la paroi cylindrique 2 est reliée, au moyen d'un entrainement (non indiqué), à un axe support et rotatif 3 autour duquel tourne très lentement la chambre d'humidification. A cet effet l'axe 3 est supporté par des paliers non représentés dans les Figures et est actionné en rotation au moyen d'un moto-réducteur, non plus représenté, et des dispositifs de transmission.

Selon une forme de réalisation préférée, non représentée parce que non essentielle à la compréhension de la présente invention, l'axe 3 est actionné par une chaine et roue dentée solidaire de ce dernier, tandis que le moto-réducteur se trouve à l'extérieur de l'installation. Sur la surface extérieure de la paroi cylindrique 2 de la chambre d'humidification 1 est fixée une vis d'Archimède 4, dont le but est de saisir le matériel qui sort du fond à la base de la chambre d'humidification 1 et de remplir un espace délimité vers le haut par la roue à étoile qui tient la paroi cylindrique 2 et vers le bas par le fond 5 d'un cylindre fixe 6 qui entoure la vis d'Archimède et la ferme avec un petit jeu latéral.
La construction d'une telle vis sans fin 4 se trouvant à l'intérieur d'un manteau cylindrique 6 et assurant l'alimentation du matériel du bas vers le haut est familière à chaque homme du métier et ne demande pas d'autres explications. II suffira de souligner que la vis sans fin 4 se prolonge vers le bas et par son extrémité libre, au dessous de la roue à étoiles qui soutient la chambre d'humidification 1, pour lècher le fond 5 du cylindre fixe 6, ce qui veut dire qu'elle entre dans l'espace occupé par le matériel. L'intérieur de la chambre d'humidification 1 et l'espace annulaire qui l'entoure, à l'intérieur duquel tourne la vis sans fin 4, constituent donc un système de vases communiquant, qui sont remplis d'eau jusqu'à une hauteur prédéterminée de manière à obtenir l'humidification du matériel par immersion complète. Dans la Fig.1 l'eau qui remplit le fond de la chambre d'humidification 1 et la chambre annulaire sus mentionnée est indiquée symboliquement au moyen des lignes de forme ondulée: on voit que, dans l'exemple montré, l'eau occupe environ 1/3 de la hauteur de la chambre d'humidification 1. Ce niveau peut être choisi à volonté en fonction du temps d'humidification nécessaire et naturellement de la vitesse de passage du matériel à travers la chambre 1. L'invention prévoit que le temps d'humidification complète - qui est égal au temps mis par le matériel pour descendre dans la chambre d'humidification 1 du niveau supérieur jusqu'au fond 5 et pour ensuite remonter, sous la poussée de la vis sans fin 4, dans la chambre annulaire comprise entre la paroi extérieure de la chambre 1 et la paroi interne du cylindre fixe 6, jusqu'au niveau supérieur de l'eau - soit compris entre 2 et 10 heures. Ce temps est donc réglé d'une part en adaptant la vitesse de rotation de la vis 4, laquelle détermine le débit du matériel de l'installation, et d'autre part par le niveau de l'eau contenue dans les vases communiquants précités.

La chambre d'humidification est entourée de plusieurs autres chambres 7, 7', 7'', ..... 7x, qui constituent ensemble le digesteur. Les chambres 7 - 7x sont de forme essentiellement cylindriques à axes verticaux et entourent entièrement la chambre d'humidification cylindrique 1. Grâce à un choix approprié concernant les dimensions on obtient que les chambres 7,...7x se touchent entre elles et soient intérieurement tangentes à la paroi extérieure du cylindre fixe 6. Cette condition est réalisée quand, par exemple, comme le montre la Fig. 2, les chambres 7,...7x ont un diamètre essentiellement égal à celui du cylindre fixe 6 et quand sont disposées autour de ce cylindre six chambres 7,...7x. II est toutefois possible de réaliser une disposition analogue à celle montrée en choisissant un nombre quelconque de chambres qui constituent le digesteur: par exemple 5 ou 8 chambres. II suffit de dimentioner le cylindre fixe en conséquence.
Ce choix montré des chambres de forme cylindrique 7,...7x pour constituer le digesteur entourant la chambre d'humidification ne doit pas être compris dans une forme restrictive du point de vue inventif. En fait il est sans autre imaginable de penser à des chambres constituant le digesteur d'une autre forme que celle cylindrique à section circulaire, par exemple de forme trapézoïdale (non montrée). Ceci rentre également dans le cadre de l'invention. Toutefois les chambres de forme cylindrique présentent plusieurs avantages qu'il est bon de souligner et qui constituent une forme préférentielle de l'invention. Avant tout, de telles chambres, qui sont des silos cylindriques, sont faciles à fabriquer et sont par conséquent moins onéreuses que d'autres constructions. Elles peuvent, si elles sont faites en acier, être en tôles roulées ou alors, si elles sont en résine synthétique, elles peuvent être roulées sur mandrins, une technique largement utilisée dans la fabrication des silos pour fourrages etc...
La forme la plus appropriée des chambres 7,...7x du digesteur peut donc dépendre du matériel choisi pour la fabrication de ces chambres, mais non est limitée inventivement à celle de forme cylindrique à section circulaire.

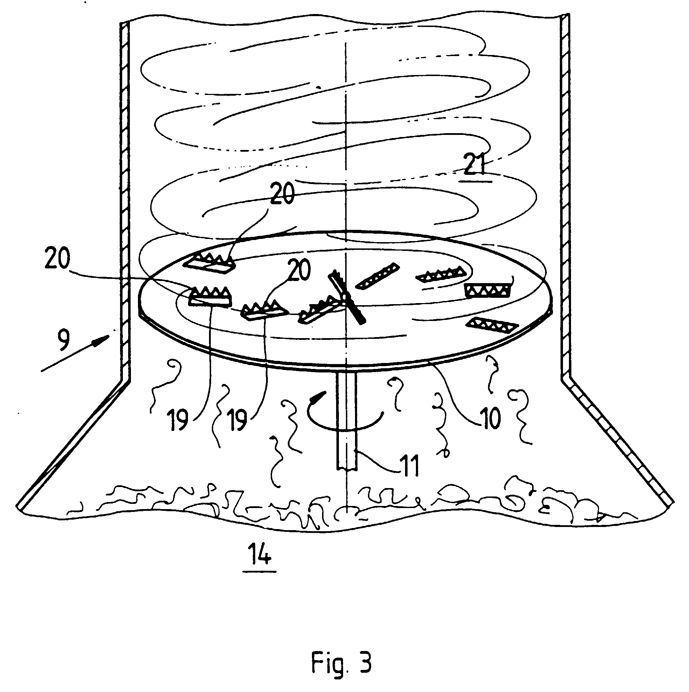

En outre, en choisissant la forme cylindrique montrée, on a l'avantage, qui sera expliqué plus en détail ci-après, de former des canaux 8, 8', 8", ...8x de section triangulaire à côtés concaves adjacents au cylindre fixe 6 sur toute la hauteur des chambres 7, 7', 7'',...7x du digesteur et de la chambre d'humidification 1.Ces canaux 8,...8x servent de manière idéale, comme il sera expliqué plus loin,comme canaux d'amenée d'air pré-chauffé du digesteur. En outre la forme choisie avec chambre de forme cylindrique à section circulaire constitue une structure autoportante de grande solidité, qui rend superflu tout autre élément porteur.
Par ailleurs un avantage des chambres 7, 7', 7'',...7x constituant le digesteur est lié à l'extraction du matériel de ces chambres, puisque selon l'invention ces dernières sont dotées, à leur partie inférieure, d'un dispositif d'extraction du matériel 9, représenté schématiquement dans les Fig, 1 et 2 dont la forme de réalisation particulièrement efficace sera expliquée plus loin à l'aide de la Fig.3. De toute façon il est clair qu'une chambre de section circulaire offre des conditions particulièrement favorables pour la réalisation d'un tel dispositif, qui peut se présenter comme un plateau tournant autour de son axe central. C'est précisément cette forme qui a été choisie dans l'exemple de réalisation selon les Fig. 1 et 2. Dans ces Figures on voit que le fond des chambres 7, 7x est constitué d'un disque en tôle 10 qui est fixé sur un palier (non représenté) à axe de rotation 11 et présente une série d'ouvertures (indiqués dans la Fig. 2 lesquelles sont disposées à des distances diverses de l'axe du disque) qui seront décrites plus en détail à l'aide de la Fig. 3 comme exemple de réalisation.

Nous voulons pourtant dès à présent souligner le fait que le système d'extraction du matériel de la ou des chambres 7,...7x qui constituent le digesteur n'est pas lié à la solution montrée avec le disque 10 et l'axe de rotation 11, mais peut être réalisée également de manières différentes non montrées mais connues dans la pratique, semblables par exemple à celui qui sera montré en rapport à une variante d'exécution pour la chambre de maturation.
La solution montrée par les Fig. 1 et 2 a d'autre part l'avantage particulier de se prèter d'une façon optimale pour la mécanisation, puisque les axes de la chambre d'humidification 3 et des chambres 7,...7x (indiquées dans les Fig. 11,...11x) peuvent être reliés cinématiquement par une seule chaine entrainant des roues à chaines pour être actionnée à partir d'un seul moto-réducteur disposé à l'extérieur de l'installation. II s'agit cependant de caractéristiques pas essentielles du point de vue de l'invention, raison pour laquelle on renonce ici à une description plus détailiée. La seule chose importante est que les chambres 7,...7x, qui constituent le digesteur puissent être remplies par la partie supérieure au moyen de la vis sans fin 4, que le matériel puisse s'y déplacer par gravité du haut vers le bas en un laps de temps défini selon l'invention entre 2 et 6 jours, ayant soin de maintenir une température moyenne entre 65 et 80°C dans les chambres 7,...7x et que ce matérial 9 puisse être éloigné par le bas au moyen d'un dispositif d'extraction adéquat.
Pour faciliter la distribution du matériel amené par la vis sans fin 4 dans les chambres 7,...7x, sont prévus des systèmes de répartition du matériel ayant, dans l'exemple des Fig. 1 et 2, la forme de bras tangentiels 12, 12' etc... appliqués aux parois extérieures du cylindre 2. En outre le cylindre fixe 6 présente, en sa partie supérieure, une couronne 13 horizontale lèchée par les bras 12, dont le but est de fermer la partie supérieure des canaux 8,...8x afin d'éviter que le matériel amené par la vis sans fin 4 puisse y tomber. Les bras de distribution 12 poussent donc le matériel qui sort de l'espace annulaire supérieur sous la poussée de la vis sans fin 4 sur la couronne 13, de manière à ce que le matériel tombe, réparti régulièrement grâce aux bras, dans les chambres qui forment le digesteur. A l'aide de dispositifs adéquats de réglage de la vitesse du. système d'extraction 9, dispositifs non indiqués ici, mais à la portée de chaque homme de métier, on prend les dispositions nécessaires de façon à ce que la vitesse de déplacement du matériel vers le bas des chambres 7,...7x, et par voie de conséquence la durée de la phase de pré-compostage, soit comprise selon l'invention, entre 2 et 6 jours, en s'assurant que les chambre 7,...7x restent toujours pleines de matériel.
La température dans les chambres 7,...7x du digesteur est maintenue, par des moyens adéquats qui règlent le débit d'air à faire passer en co-courant à travers le matériel, comme l'indiquent les flèches f de la Fig. 1, de manière à ce que celle ci reste comprise entre 65° et 80°C, comme température moyenne, selon la définition qui a été donnée plus avant.
Au dessous de la chambre d'humidification 1 et des chambres 7,...7x qui forment le digesteur se trouve une chambre de maturation du matériel 14, dans laquelle les dispositifs d'extraction déversent le matériel 9. Le matériel qui est ainsi extrait, comme il sera expliqué plus loin à l'aide d'un exemple préféré de réalisation, des chambres 7,...7x tombe donc dans la chambre 14, où il forme un tas qui, dans la pratique, remplit la dite chambre. Naturellement le matériel provient de plusieurs chambres 7,...7x, de manière que le tas qui se forme dans la chambre 14 n'aura pas une forme parfaitement plate en sa partie supérieure, mais légèrement ondulée. Ceci ne joue aucun rôle dans le cadre de la présente invention.

La chambre de maturation 14 présente également, sur son fond, un dispositif d'extraction du matériel 15, au moyen duquel le matériel mûr est extrait essentiellement en mode continu. Le volume de la chambre de maturation , selon l'invention, est choisi de façon à ce que le matériel puisse séjourner dans la dite chambre, passant ainsi du haut en bas du tas, pendant un laps de temps compris entre 8 et 20 jours, cette durée de traitement venant déterminée aussi bien en fonction du matériel traité, de sa qualité, respectivement du degré de maturation du compost que l'on désire obtenir. L'expérience a démontré que le temps maximum prévu de 20 jours est suffisant pour obtenir, pour la plus grande partie du matériel brut, un compost mûr, parfaitement stable et exempt de germes pathogènes, destiné à des fins les plus variées (par exemple vente en sacs, utilisation en orto-fruti-agri ou floriculture etc...). La température moyenne qui, en prenant certaines précautions, sera maintenue à l'intérieur du tas en voie de maturation est comprise entre 25° et 40°C. La chambre de maturation 14 représentée dans les Fig. 1 et 2 est de forme cylindrique de section circulaire, forme qui est liée à une particularité de la construction du système d'extraction du matériel 15, laquelle sera explicitée plus avant.
Une telle chambre peut par contre être imaginée d'une forme quelconque: il est suffisant que le matériel provenant du digesteur puisse la remplir avec une certaine régularité et qu'un dispositif d'extraction du matériel 15 soit efficace sur toute la surface de la base, respectivement sur tout le fond.

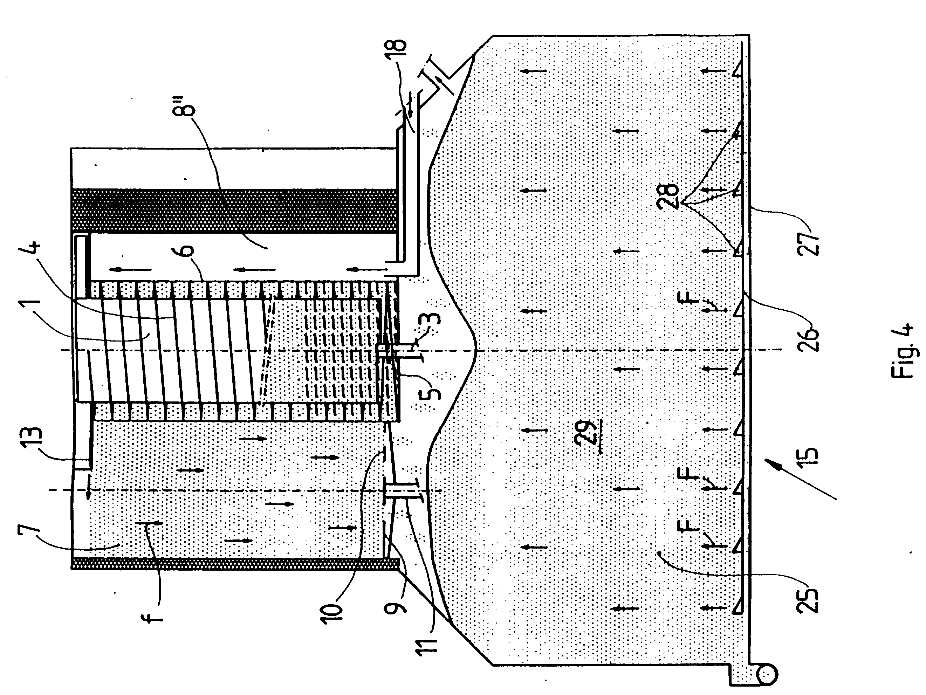

Selon une forme d'exécution préférée de l'invention, les parties des parois des chambres circulaires 7,...7x qui constituent le digesteur orientées vers l'extérieur, indiquées dans les Fig.2 et 4 par 16, 16', 16'',... 16x sont isolées thermiquement, ce qui est représenté dans les Figures par des hachures quadrillées de grande épaisseur des dites parois. Par contre les parties des parois 17,... 17x des chambres circulaires 7, ...7x qui constituent le digesteur orientées vers la chambre d'humidification 1 ne sont pas revêtues d'isolation thermique. Entre deux chambres adjacentes 7, 7', 7'', ...7x qui constituent le digesteur et la chambre d'humidification 1 se trouve délimité un canal 8,8', 8'',...8x vertical de forme triangulaire dont les côtés sont concaves. A travers ce canal 8, 8', ...8x est soufflé, du bas vers le haut et à l'aide d'un dispositif de tuyaux d'alimentation (desquels un seul est représenté dans la Fig. 1 par le chiffre 18), l'air qui passe ensuite dans les chambres 7, ...7x du digesteur en sortant des canaux 8, ...8x en dessous de la couronne 13 et traverse le matériel en mode co-courant comme indiqué par les flèches f.
Dans son passage à travers les canaux 8,...8x, passage qui se fait en contre courant par rapport au matériel qui se chauffe intensément dans les chambres 7, ...7x, l'air se charge d'une partie de la chaleur qui se transmet par conduction à travers les parois non isolées 17, ...17x et se préchauffe, ce qui fait que cet air entre ensuite dans les chambres 7, ...7x du haut déjà après avoir atteint une température élevée. Ceci est utile pour accélérer le départ en activité bactérienne du pré-compostage, car on sait qu'une température élevée (de toute façon inférieure à 80°C) favorise la reproduction des bactéries.
Selon une forme de réalisation préférée de l'invention, représentée schématiquement également dans les Figures 1, 2 et 4, 5 et d'une manière plus détaillée dans la Figure 3, le dispositif d'extraction du matériel 9 de chacune des chambres cylindriques 7, ...7x constituant le digesteur est formé d'un disque de tôle 10 tournant autour de son axe vertical 11 et qui ferme la partie inférieure des chambres de 7 à 7x. Le disque 10 présente, sur sa surface, une série d'ouvertures rectangulaires 19 disposées radialement à distance croissante de l'axe de rotation 11, de manière à couvrir tout le rayon du disque 10, avec la présence d'une série de pointes 20 disposées sur l'arête antérieure de chaque ouverture 19, vu dans le sens de son déplacement contre le matériel, lesquelles pointes pénêtrent dans la partie inférieure de la colonne de matériel 21 tout en le grattant pour le libérer et le laisser tomber à travers l'ouverture en question dans la chambre de maturation 14.
Ce type de dispositif de grattage 9 a montré son efficacité pour détacher un matériel qui, à la sortie des chambres 7, ...7x du digesteur, se présente sous une forme très compacte et qu'il est nécessaire de le gratter pour lui permettre de se détacher de la colonne du matériel. Le rôle des pointes 20 rapantes est précisément de "peigner" le matériel.

Selon une première forme de réalisation préférée de l'invention, représentée dans les Fig. 1 et 2, le système d'extraction du matériel mûr 15 de la chambre de maturation 14 est constitué d'une alimentation à vis sans fin 22 disposé radialement sur le fond 23 de la chambre de maturation 14 de forme essentiellement cylindrique. L'alimentation à vis sans fin 22 est fixé à une extrémité au centre de la chambre de maturation 14, à où la vis sans fin 22 apporte le matériel mûr de la périphérie de la chambre de maturation 14 vers son centre, où le dit matériel est éliminé au travers d'un conduit central d'évacuation 24. Cette solution a l'avantage d'être simple et de garantir une extraction régulière et continue du matériel de toute la surface du fond 23 de la chambre de maturation 14. Cette solution est applicable avantageusement quand la chambre de maturation peut être de forme cylindrique, puisque dans ce cas la vis sans fin 22 peut en balayer toute la surface. Cette solution a cependant des limites relatives à cause des dimensions maximales possibles de la chambre de maturation. En effet, au delà d'un certain rayon de la chambre de maturation 14, l'effort de déplacement du matériel auquel est soumise la vis sans fin 22, aussi bien pour la rotation sur elle même que pour la rotation sur la surface du fond 23 de la chambre 14, devient excessif, de sorte que la consommation d'énergie déconseille cette solution au delà d'une certaine grandeur de l'installation.

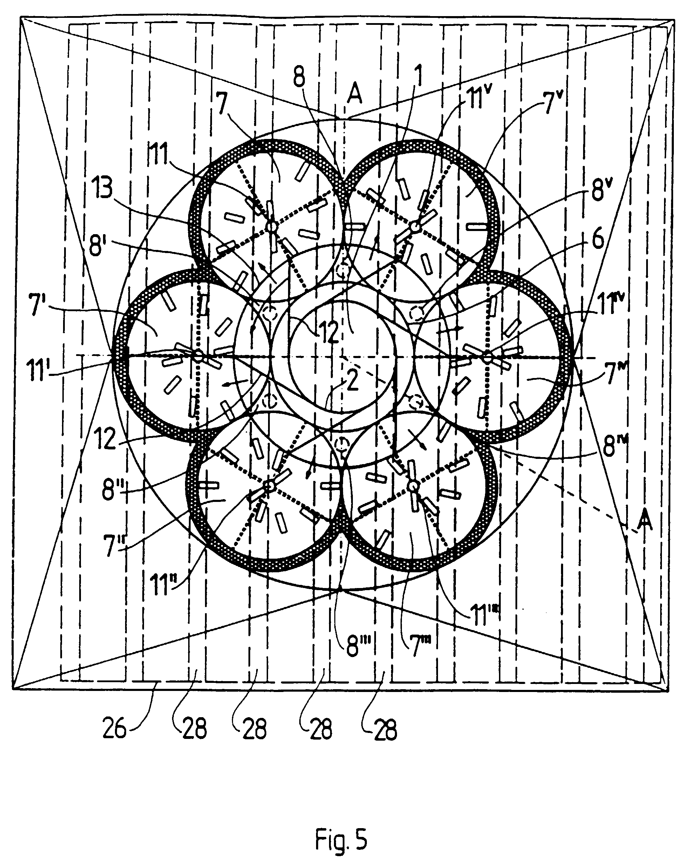

Pour tourner la difficulté, on peut alors opter pour la solution du système d'extraction, de forme préférée, représentée dans la forme d'exécution de l'installation des Figures 4 et 5. Cette forme d'exécution de l'invention se différencie de celle des Figures 1 et 2 seulement par le fait que la chambre de maturation 14 est ici de forme carrée au lieu d'être circulaire. Le reste, soit tous les éléments horizontaux au dessus de la chambre de maturation 25, sont exactement identiques à ceux de l'exemple précédent et portent donc les mêmes numéros de référence.
Le système d'extraction du matériel mûr 15 de la chambre de maturation carrée est constitué d'un râteau 26 disposé sur le fond 27 de la dite chambre 25. Le râteau 26 a la forme d'une grille portant une série de listes 28 de longueur légèrement inférieure au côté de la chambre 25. Les listes 28 ont une section triangulaire, de sorte que, quand le râteau 26 se déplace alternativement d'un côté à l'autre et perpendiculairement aux dites listes, celles ci poussent le matériel toujours dans la même direction - dans la Fig.4 de droite à gauche - balayant ainsi tout le fond 27 de la chambre de maturation 25 et déplaçant le matériel mûr vers l'une des parois (celle de droite dans la Fig. 4) de la chambre 25, là où le dit matériel sera transporté vers l'extérieur par des moyens connus mais non représentés (par exemple vis sans fin, canal d'aspiration, ruban transporteur etc...).
Ce système de transport du matériel s'est révélé très efficace particulièrement dans les installations de grandes dimensions, parce que les forces nécessaires à son fonctionnement sont des forces de traction et de poussée facilement assurées par les systèmes hydrauliques modernes.

II est par ailleurs très avantageux de combiner le système d'extraction du matériel 15 avec l'alimentation en air, processus qui constitue une autre forme préférée de l'invention. Ceci permet d'obtenir un assèchement du matériel mûr extrait, respectivement son conditionnement. A telle fin la vis sans fin 22, respectivement le râteau 26, est reliée (é) à une conduite d'air sec (non représentée mais facilement imaginable pour l'homme de métier). Au moyen de cette amenée d'air sec ce dernier est réparti, comme l'indiquent les flèches F sur toute la longueur de travail de la vis sans fin 22, respectivement sur toute la longueur du râteau 26, de manière à être pulsé du bas vers le haut à travers toute la colonne de matériel 29 et toute sa section. Ceci provoque un séchage du matériel mûr du bas vers le haut, c'est à dire que le matériel qui est transporté par le dispositif d'extraction est plus sec que celui des couches supérieures. En effet, il faut tenir compte que pendant la phase de maturation il est nécessaire de maintenir un certain degré d'humidité dans la colonne de matériel 29, alors que pour le traitement final du produit composté (par exemple pour son ensachage) il est préférable que le matériel soit bien sec, avec un degré d'humidité d'environ 20 %. Grâce au dosage et aux caractéristiques de température et d'humidité de l'air amenée à travers l'organe d'extraction du matériel mûr 15 il est possible de maintenir entre des limites plutôt étendues le degré d'humidité du compost extrait, l'adaptant ainsi à l'usage qui en sera fait.

II est notoire que la fermentation bactérienne de la matière organique est génératrice de substances oxydantes donc corrosives, II est donc indiqué de protéger l'installation de telles influences négatives.
Ceci est obtenu de façon inventive en prévoyant, selon une forme préférée de réalisation de l'invention, que la chambre d'humidification 1 et/ou les chambres 7, ...7x constituant dans leur ensemble le digesteur et/ou la chambre de maturation 14, 25 soient exécutées en matériaux résistant à la corrosion par les acides et les gaz développés durant l'opération de compostage, en particulier en acier inoxydable et/ou en matières minérales tel que le beton et/ou en bois et/ou en résines synthétiques.
Le choix des matériaux utilisés pour la fabrication des parties unitaires de l'installation dépend d'une série de facteurs, parmi lesquels la grandeur de l'installation, qui pose des problèmes bien déterminés de résistance mécanique,le type de matériel à composter, lequel a une influence sur le degré corrosif de l'opération, la consommation d'énergie grise dépensée pour la fabrication des composants même de l'installation et, à ne pas négliger, les considérations économiques prises dans le sens le plus large du terme, qui tiennent compte de la durée, des coûts d'exercice, etc, de l'installation.
Une installation type réalisant la présente invention comprend par exemple les éléments suivants:
- Une chambre d'humidification d'un diamètre intérieur de 1,5 m et d'une hauteur utile de 4 m.
- Un digesteur composé de 6 chambres cylindriques de section circulaire d'un diamètre intérieur de 2 m et d'une hauteur utile de 4 m.
- Une chambre de maturation cylindrique d'un diamètre de 9 m de section circulaire et d'une hauteur utile de 5 m.

Une telle installation permet de traiter en continu environ 1500 tonnes par année de matériel compostable, correspondant à un volume de 19 m3 de matériel par jour. L'installation pouvant bien entendu, entre certaines limites, être réalisé à plus grande comme à plus petite échelle, considérant que sa rentabilité pose des limites aussi bien dans un sens que dans l'autre.

### LEGENDE DES FIGURES

- 1.: Chambre d'humidification
- 2.: Paroi cylindrique
- 3.: Arbre de support et de rotation
- 4.: Vis sans fin
- 5.: Fond
- 6.: Cylindre fixe;7,7',7",7x etc. Chambres du digesteur;8,8',8",8x etc. Canaux
- 9.: Dispositif d'extraction du matériel
- 10.: Disque en tôle
11,11',11",11x etc. Axe du disque 10
- 12.: Bras de distribution
- 13.: Couronne
- 14.: Chambre de maturation
- 15.: Système d'extraction du matériel
- 16.: Parties des parois extemes des chambres 7, ...7x
- 17.: Parties des parois intemes des chambres 7, ...7x
- 18.: Tube d'alimentation
- 19.: Ouverture rectangulaire
- 20.: Pointe
- 21.: Colonne de matériel
- 22.: Alimentation à vis sans fin
- 23.: Fond
- 24.: Conduite centrale
- 25.: Chambre de maturation
- 26.: Râteau
- 27.: Fond
- 28.: Listes
- 29.: Colonne de matériel

## Revendications

1. Installation de compostage pour réaliser le processus selon la revendication 1,
caractérisée par le fait
d'être composé des éléments suivants:
a) une chambre d'humidification (1) du matériel destinée à être alimentée d'en haut de manière essentiellement continue en matériel déchiqueté, remplie au moins partiellement de liquide acqueux, de forme cylindrique dont l'axe est vertical (3), ouverte à la partie supérieure avec une ouverture d'alimentation du matériel, ouverte en sa partie inférieure et fixée à un arbre de rotation (3) vertical par une roue à étoiles autour duquel arbre la chambre (1) tourne et sur la surface extérieure de laquelle est fixée une vis sans fin (4) toumant à l'intérieur d'un cylindre fixe (6) et alimentant le matériel de manière essentiellement continue du bas vers le haut.
b) une ou plusieurs chambres(7, 7', ...7x) constituant, dans leur ensemble, le digesteur, chacune de forme cylindrique avec axe (11,11',...11x) vertical et enveloppantes, de manière à circonscrire entièrement la chambre d'humidification (1) destinée à être remplie par la partie supérieure du matériel amené par la vis sans fin (4) toumant solidairement avec la chambre d'humidification (1) et dotées, à leur partie inférieure, d'un dispositif d'extraction du matériel (9).
c) une chambre de maturation du matériel (14, 25) disposée en bas de la chambre d'humidification (1) et des chambres (7, ...7x) constituant le digesteur et dans laquelle pénètrent les dispositifs d'extraction du matériel (9) des chambres simples (7, ...7x) constituant le digesteur et dotée, sur son fond (23), d'un système d'extraction du matériel (15) au moyen duquel le matériel mûr est extrait de manière essentiellement continue.

2. Installation de compostage selon la revendication 4,
caractérisée par le fait que
les parties des parois (16, ...16x) des chambres circulaires (7, ...7x) qui constituent le digesteur orientées vers l'extérieur sont isolées thermiquement, tandis que les parties des parois (17, 17x) des chambres circulaires (7, ...7x) qui constituent le digesteur orientées vers la chambre d'humidification (1) ne sont pas isolées thermiquement, la où alors entre deux chambres adjacentes (7, 7', 7", ...7x), des chambres (7, ...7x) qui constituent le digesteur et la chambre d'humidification (1) est délimité un canal vertical (8 ...8x) de forme triangulaire dont les côtés sont concaves au travers duquel est insufflé, du bas vers le haut, l'air qui passe ensuite du digesteur, en mode co-courant par rapport au matériel, afin de réaliser la phase de pré-compostage aérobique du matériel.

3. Installation de compostage selon la revendication 4,
carctérisée par le fait que
le dispositif d'extraction du matériel (9) de chacune des chambres cylindrique (7, ...7x) constituant le digesteur est formé d'un disque (10) toumant autour de son axe vertical (11), fermant la partie inférieure de la chambre (7, ...7x) et doté, sur sa surface, d'une série d'ouvertures rectangulaires (19) disposées radialement à distance croissante de l'axe (11) de manière à couvrir tout le rayon du disque (10), où l'arête antérieure de chacune des ouvertures rectangulaires (19), dans le sens de déplacement de la dite ouverture, est dotée d'une série de pointes (20) qui pénètrent dans la surface inférieure de la colonne de matériel (21) et grattent le dit matériel lequel, passant à travers l'ouverture correspondante (19), tombe dans la chambre de maturation (14) située directement dessous.

4. Installation de compostage selon la revendication 4,
caractérisée par le fait que
le système d'extraction du matériel (15) mûr de la chambre de maturation (14) est constitué d'une alimentation à vis sans fin (22) disposé radialement sur le fond (23) de la chambre de maturation (14) de forme essentiellement cylindrique, fixé à une extrémité au centre de la dite chambre (14) et toumant autour de la dite extrémité de manière à balayer tout le fond (23) de la chambre (14), où ensuite la vis sans fin (22) apporte le matériel mûr de la périphérie de la chambre de maturation (14) vers son centre, où le dit matériel est conduit vers l'extérieur au moyen d'une conduite centrale de transport (24).

5. Installation de compostage selon la revendication 4,
caractérisée par le fait que
le système d'extraction du matériel (15) de la chambre de maturation (25) est constitué d'un râteau (26) disposé sur le fond (27) de la chambre de maturation, de forme essentiellement rectangulaire (25) et se déplaçant alternativement de ci et de là de manière à balayer tout le fond (27) de la chambre (25) et de déplacer ainsi le matériel mûr à extraire vers une des parois de la chambre de maturation (25), d'où il sera enlevé.

6. Installation de compostage selon les revendications 7, respectivement 8
caractérisée par le fait que
la vis sans fin (22), respectivement le râteau (26) est reliée (ou) à une conduite d'amenée d'air sec lequel air est réparti sur toute la longueur de travail de la vis sans fin (22), respectivement sur toute la longueur du râteau (26), de manière à être pulsé du bas vers le haut à travers la colonne de matériel (29), le long de toute sa section, et de provoquer le séchage du matériel mûr avant son extraction.

7. Installation de compostage selon la revendication 4,
caractérisée par le fait que la chambre d'humidification (1) et/ou les chambres (7, ...7x) constituant, dans leur ensemble, le digesteur et/ou la chambre de maturation (14, 25) sont exécutées en matériaux résistant à la corrosion des acides et des gaz produits durant l'opération de compostage, en particulier en acier inoxydable et/ou en matériaux à base minérale tels que les bétons et/ou en résines synthétiques.

8. Procédé pour le compostage de déchets organiques broyés tels que déchets de jardins et de forêts, de cuisine crus et/ou cuits et similaires, dans lequel le matériel à composter est d'abord humidifié, puis soumis à un compostage aérobique dans un digesteur et succéssivement à maturation aérobique dans une chambre de maturation, dans une installation selon la revendication 1, caractérisé par les paramètres de travail suivants:
a) la phase d'humidification a lieu par immersion dans un liquide acqueux pendant une période de temps d'une durée comprise entre 2 et 10 heures,
b) la phase de pré-compostage aérobique a lieu dans un digesteur dans lequel le matériel reste pendant une période de temps comprise entre 2 et 6 jours, sous une température moyenne comprise entre 65° et 80°C,
c) la phase de maturation aérobique a lieu dans une chambre de maturation dans laquelle le matériel reste pendant une période de temps comprise entre 8 et 20 jours, sous une température moyenne comprise entre 25° et 40°C, ainsi que par le fait que le traitement du matériel pendant les phases de a) à c) ait lieu en mode continu.

9. Procédé selon la revendication 1, caractérisé par le fait que,
pour obtenir le pré-compostage aérobique dans la phase b), un courant d'air soit contraint de passer à travers le matériel dans le même sens que celui de déplacement du dit matériel.

10. Procédé selon la revendication 2,
caractérisé par le fait que
l'air soit préchauffé en le faisant entrer en contact, en système à co-courant par rapport au matériel qui se déplace dans le digesteur, avec une paroi extérieure du digesteur non isolée.

## Patentansprüche

1. Kompostieranlage zum Ausführen des Verfahrens gemäss Anspruch 8,
**dadurch gekennzeichnet**, dass
die Anlage aus den folgenden Elementen besteht:
a) einer Befeuchtungskammer (1) für das Material, das zerkleinert und im Wesentlichen kontinuierlich oben einzufüllen ist, und das mindestens teilweise eine wässerige Flüssigkeit enthält,
von zylindrischer Form und mit vertikal angeordneter Achse (3), oben offen mit einer Einfüllöffnung für das zu kompostierende Material, und unten offen und an einer Drehachse (3) befestigt, um welche die Kammer (1) rotiert, und auf deren Aussenfläche eine endlose Schraube (4) befestigt ist, die in einem feststehenden Zylinder (6) rotiert und das Material im Wesentlichen kontinuierlich von unten nach oben befördert;
b) einer oder mehrerer Kammern (7, 7', ... 7x), die zusammen den Verrottungsraum bilden, wobei jede der zylindrischen Kammern mit vertikaler Achse (11, 11', ... 11x) angeordnet ist, und welcher die Befeuchtungskammer (1) rundherum vollständig umgibt, und der mit dem Material von oben her zu beschicken ist, das mittels der endlosen Schraube (4) heraufgehoben wird, die als Einheit zusammen mit der Befeuchtungskammer (1) rotiert, und die in ihrem unteren Teil mit einer Vorrichtung zur Entnahme von Material (9) versehen ist;
c) einer Reifungskammer für das Material (14, 25), die unterhalb der Befeuchtungskammer (1) und den Kammern (7, 7', ... 7x), die den Zersetzungsraum bilden, angeordnet ist, und in welche sich die Entnahmevorrichtungen für das Material (9) der einzelnen Kammern (7, 7', ... 7x) erstrecken, und die an ihrem Boden (23) mit einem Materialaustragsystem (15) versehen ist, mittels dem das reife Kompostmaterial im Wesentlichen kontinuierlich entnommen wird.

2. Kompostieranlage gemäss dem Anspruch 1,
**dadurch gekennzeichnet**, dass
die nach aussen gerichteten Wandpartien (16, ... 16x) der kreisrunden Kammern (7 ... 7x), die den Verrottungsraum bilden, thermisch isoliert sind, während die nach innen gegen die Befeuchtungskammer (1) gerichteten Wandpartien (17, ... 17x) der kreisrunden Kammern (7, ... 7x), die den Verrottungsraum bilden, thermisch nicht isoliert sind, wobei zwischen je zwei benachbarten Kammern (7, 7', 7" ... 7x), die den Verrottungsraum bilden, und der Befeuchtungskammer (1) ein vertikaler Kanal (8, ... 8x) von etwa dreieckiger Form mit konkaven Wänden eingeschlossen wird, durch den von unten nach oben Luft eingeblasen wird, die nachher den Verrottungsraum im Gleichstrom gegenüber dem Material durchströmt, damit die Phase der Vorkompostierung mit aerobem Abbau des Materials stattfinden kann.

3. Kompostieranlage gemäss dem Anspruch 1,
**dadurch gekennzeichnet**, dass
das Materialaustragsystem (9) in jeder der zylindrischen Kammern (7, ... 7x), die den Verrottungsraum bilden, von einer Scheibe (10) gebildet wird, die sich um ihre vertikale Achse (11) dreht und den unteren Teil der Kammer (7, ... 7x) abschliesst, und die an ihrer Oberfläche mit einer Reihe rechteckiger Öffnungen (19) versehen ist, die radial gerichtet mit zunehmendem Abstand von der Achse (11) in solcher Weise versetzt aufgereiht sind, dass die ganze Scheibenfläche davon überdeckt ist, wobei in der Drehrichtung gesehen, der vordere Rand jeder der rechteckigen Öffnungen (19) mit einer Reihe von Spitzen (20) versehen ist, die von unten her in die Materialsäule (21) eingreifen und Material abkratzen, das durch die entsprechende Öffnung (19) in die direkt darunter stehende Reifungskammer (14) fällt.

4. Kompostieranlage gemäss dem Anspruch 1,
**dadurch gekennzeichnet**, dass
das Materialaustragsystem (15), welches das reife Kompostmaterial aus der Reifungskammer (14) herausfördert, aus einer Fördervorrichtung mit einer im Wesentlichen zylindrischen endlosen Schraube (22) besteht, die sich in radialer Richtung über den Boden (23) der Reifungskammer (14) erstreckt, wobei ein Ende in der Mitte der genannten Kammer (14) befestigt ist, und die sich in solcher Weise um das genannte Ende dreht, dass der ganze Boden (23) der Kammer (14) bestrichen wird, wobei die endlose Schraube (22) das reife Kompostmaterial vom äusseren Rand der Reifungskammer (14) her gegen deren Mitte fördert, wobei das genannte Material durch eine zentrale Transportleitung (24) nach aussen aus der Anlage weggeführt wird.

5. Kompostieranlage gemäss dem Anspruch 1,
**dadurch gekennzeichnet**, dass
das Materialaustragsystem (15), welches das reife Kompostmaterial (29) aus der Reifungskammer (25) herausfördert, aus einem auf dem Boden (27) der im Wesentlichen rechteckigen Reifungskammer (25) angeordneten Rechengatter (26) besteht, wobei sich dieses abwechslungsweise solchermassen hin- und herbewegt, dass das herauszufördernde reife Kompostmaterial gegen eine der Wände der Reifungskammer (25) hin verschoben wird, von wo es aus der Anlage entfernt wird.

6. Kompostieranlage gemäss den Ansprüchen 4 bzw. 5,
**dadurch gekennzeichnet**, dass
die endlose Schraube (22) bzw. das Rechengatter (26) mit einer Zufuhrleitung verbunden ist, aus der trockene Luft über die ganze Länge der endlosen Schraube (22) bzw. des Rechengatters (26) solchermassen verteilt wird, dass sie über den ganzen Querschnitt von unten nach oben in den oberen Teil der Materialsäule (29) gedrückt wird und die Trocknung des reifen Kompostmaterials vor seiner Entnahme bewirkt.

7. Kompostieranlage gemäss dem Anspruch 4,
**dadurch gekennzeichnet**, dass
die Befeuchtungskammer (1) und/oder die Kammern (7, ... 7x), die zusammen den Verrottungsraum und/oder die Reifungskammer (14, 25) bilden, aus gegen Säuren und gegen bei der Kompostierung entstehende Gase korrosionsfesten Materialien hergestellt werden, insbesondere aus rosffreiem Stahl und/oder aus Materialien auf Mineralbasis wie Beton oder aus synthetischen Kunstharzen.

8. Verfahren zur Kompostierung organischer zerkleinerter Abfälle wie Gartenabfälle und Forstabfall, gekochte oder rohe Küchenabfälle, in einer Anlage gemäss dem Anspruch 1, wobei das zu kompostierende Material zuerst befeuchtet wird, sodann einer aerobischen Kompostierung in einem Verrottungsraum unterzogen wird, und anschliessend in einer Reifungskammer aerobisch zu reifem Kompost ausgereift wird,
**gekennzeichnet durch** die folgenden Parameter des Arbeitsprozesses:
a) die Befeuchtungsphase wird durch Eintauchen in eine wässerige Flüssigkeit während einer Zeitspanne von 2 bis 10 Stunden bewerkstelligt;
b) die aerobe Vorkompostierungsphase wird in einem Verrottungsraum bewerkstelligt, in welchem das Material während eines Zeitraums von 2 bis 6 Tagen bei einer durchschnittlichen Temperatur von 65° bis 80°C verweilt;
c) die Phase der aeroben Reifung wird in einer Reifungskammer bewerkstelligt, in welcher das Material während eines Zeitraums von 8 bis 20 Tagen bei einer durchschnittlichen Temperatur von 25° bis 40°C verweilt, in solcher Weise, dass die Behandlung des Materials während der Phasen a) bis c) kontinuierlich erfolgt.

9. Verfahren gemäss dem Anspruch 8, **dadurch gekennzeichnet**, dass zum Erreichen einer aeroben Vorkompostierung in der Phase b) ein Luftstrom im Gleichstrom in der Richtung der Material bewegung durch das Material geführt wird.

10. Verfahren gemäss dem Anspruch 9, **dadurch gekennzeichnet**, dass die Luft vorgewärmt wird, indem sie im Gleichstrom gegenüber der Materialbewegung im Verrottungsraum mit der Aussenseite der nicht isolierten Wandpartie des Verrottungsraums in Berührung gebracht wird.

## Claims

1. Composting plant for implementing the method according to the claim 8,
**characterized in that**
the plant consists of the following elements:
a) a humidifying chamber (1) for the material, which is to shredded and to contain at least partially a watery liquid and which is to be fed substantially continually to the upper portion, which chamber is of cylindrical form with its axle oriented vertically and is open at its upper end presenting an opening for the material to be composted and is open at its bottom end which is fastened to a rotational axle (3) about which the chamber (1) rotates and on the outer surface of which an endless screw (4) is mounted rotating in a stationary cylinder (6) and lifting the material essentially continually from the bottom to the top;
b) one or a plurality of chambers (7, 7', ... 7x), which together form the digesting or pre-composting room, each chamber with its axle (11, 11', ... 11x) extending vertically and which completely surrounds the humidifying chamber (1) about its whole circumference and which is to be supplied with material from above, which material has been lifted by the endless screw (4) rotating together with the humidifying chamber (1) to which it is mounted, and which in its lower portion is provided with a device for taking off material (9);
c) a maturing chamber for the material (14, 25) arranged below the humidifying chamber (1) chambers (7, 7', ... 7x) which form the digesting or pre-composting room and into which the take-off devices (9) for the material of the individual chambers extend, and which at its bottom (23) is provided with a material take-off system (15) using which the mature compost material is taken off essentially continuously.

2. Composting plant according to the claim 1
**characterized in that**
the wall portions (16, ... 16x) of the circular chambers (7, ... 7x) forming the digesting or pre-composting room, which are facing the surrounding outer room are thermally insulated, whereas the wall portions (17, ... 17x) of the circular chambers (7, ... 7x) forming the digesting or pre-composting room, which are facing the humidifying chamber (1) are not insulated thermally, in which arrangement between two neighbouring chambers (7, ... 7x) forming the digesting or pre-composting room each and the humidifying chamber (1) a vertical duct (8, ... 8x) of approximately triangular cross-section with concave walls is enclosed through which air is blown from the bottom to the top which subsequently flows through the digesting or pre-composting room in such a manner that the pre-composting phase can be effected under aerobic decomposition of the material.

3. Composting plant according to the claim 1
**characterized in that**
the material removing system (9) in each of the cylindrical chambers (7, ... 7x) forming the digesting or pre-composting room is formed by a disc (10) which rotates about its vertical axle (11) and closes the lower portion of the chamber (7, ... 7x), and in the surface of which a series of radially extending rectangular openings is provided which openings with increasing distance from the axle (11) are lined up staggered in such a manner that the whole disc surface is covered where, seen in he direction of rotation, the front edge of each rectangular opening (19) is provided with a series of points (20) engaging the material column (21) from below and scraping off material which via the corresponding opening (19) drops into the maturing chamber (14) arranged directly below.

4. Composting plant according to the claim 1
**characterized in that**
the material removing system (15) which removes the mature compost material from the maturing chamber (14) consists of a transporting device with an essentially cylindrical endless screw (22) which extends radially across the floor (23) of the maturing chamber (14) one end of the screw being fastened at the centre of said chamber (14) and which rotates about said end in such a manner as to sweep the entire floor (23) of the chamber (14) in which process the endless screw (22) transports the mature compost material from the outer rim of the maturing chamber (14) towards its centre said material being removed from the plant via a central transporting duct (24) to the outside.

5. Composting plant according to the claim 1
**characterized in that**
the material removing system (15) which removes the mature compost material (29) from the maturing chamber (14) consists of a raking lattice (26), arranged on the floor (27) of the substantially rectangular maturing chamber (25), which reciprocates to and fro in such a manner that the mature compost material to be removed is shifted towards one of the lateral walls of the maturing chamber (25) from where it is removed from the plant.

6. Composting plant according to the claim 4, or to the claim 5 respectively,
**characterized in that**
the endless screw (22), or the raking lattice (26) respectively, is connected to a supply duct from which dry air is distributed over the full length of the endless screw (22), or of the raking lattice respectively (26), in such a manner that said air is forced from below towards the top to the upper portion of the material column (29) in such a manner that the mature compost material is dried before being taken off.

7. Composting plant according to the claim 4
**characterized in that**
the humidifying chamber (1) and/or the chambers (7, ... 7x) jointly forming the digesting or pre-composting room, and/or the maturing chamber (14, 25) are made from corrosion resistant materials resistant against acids and gases generated in the composting process, in particular from stainless steel and/or from materials with a mineral basis such as reinforced concrete, or from synthetic resins.

8. Method of composting organic shredded garbage such as garden and forest waste, cooked or raw kitchen garbage in a plant according to the claim 1, in which the material to be composted first is humidified and then is subject to an aerobic composting process and subsequently in a maturing chamber is matured into mature compost material
**characterized by** the following parameters of the process:
a) the humidifying phase is effected by immersion in a watery liquid during a time period of 2 to 10 h;
b) the aerobic pre-composting phase is effected in a digesting or pre-composting room in which the material is stored over a time period of 2 to 6 days at an average temperature ranging from 65° to 80°C
c) the phase of the aerobic maturing process is effected in a maturing chamber in which the material is stored over a time period of 8 to 20 days at an average temperature ranging from 25° to 40°C, in such a manner that the processing of the material throughout the phases a) through c) is effected in an essentially continuous manner.

9. Method according to the claim 8, **characterized in** that for achieving aerobic pre-composting in the phase b) an air stream is guided through the material in flow in the same direction as the material moves.

10. Method according to the claim 9, **characterized in** that the air is preheated as it is guided in a parallel flow, relative to the material flow in the digesting or pre-composting room, and is brought into contact with the outer surface of the non-insulated wall portion of the digesting or pre-composting room.
